(19)

Europäisches Patentamt
European Patent Office
Office européen des brevets

(11) **EP 4 567 561 A1**

(12) **EUROPEAN PATENT APPLICATION**

(43) Date of publication:
**11.06.2025  Bulletin 2025/24**

(21) Application number: **24217096.7**

(22) Date of filing: **03.12.2024**

(51) International Patent Classification (IPC):
**G06F 1/3206** (2019.01)       **G06F 1/3234** (2019.01)
**G06F 1/3287** (2019.01)       **G06N 3/063** (2023.01)

(52) Cooperative Patent Classification (CPC):
**G06F 1/3206; G06F 1/3234; G06F 1/3287;
G06N 3/063**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **05.12.2023  US 202363606593 P
22.11.2024  US 202418957651**

(71) Applicant: **Samsung Electronics Co., Ltd.
Suwon-si, Gyeonggi-do 16677 (KR)**

(72) Inventor: **YI, Donny
San Jose, CA, 95134 (US)**

(74) Representative: **Kuhnen & Wacker
Patent- und Rechtsanwaltsbüro PartG mbB
Prinz-Ludwig-Straße 40A
85354 Freising (DE)**

(54) **SYSTEMS, METHODS, AND APPARATUS FOR CONTROLLING POWER STATES OF COMPUTE RESOURCES WITH ARTIFICIAL INTELLIGENCE**

(57)    An apparatus may include at least one control circuit configured to receive activity information for one or more compute resources, and generate, using a model, based on the activity information, control information to control a power state of at least one of the one or more compute resources. The at least one control circuit may include a multiply-accumulate circuit. The at least one control circuit may include a neural processing unit. The model may include a neural network. The activity information may include first activity information, and the at least one control circuit may be further configured to collect second activity information for the one or more compute resources, and send the second activity information. The at least one control circuit may be further configured to receive, based on the sending the second activity information, one or more parameters for the model.

100

Fig. 1

EP 4 567 561 A1

## Description

TECHNICAL FIELD

This disclosure relates generally to compute resources, and more specifically to systems, methods, and apparatus for controlling power states of compute resources with artificial intelligence.

BACKGROUND

A computing system may include one or more compute resources such as central processing units (CPUs), graphics processing units (GPUs), and/or the like. One or more compute resources may be configured to run one or more computational workloads such as training, inference, and/or the like, for artificial intelligence (AI), machine learning (ML), and/or the like. Some compute resources may consume relatively large amounts of power and/or energy depending on a type of workload.

The above information disclosed in this Background section is only for enhancement of understanding of the background of the inventive principles and therefore it may contain information that does not constitute prior art.

SUMMARY

An apparatus may include at least one control circuit configured to receive activity information for one or more compute resources, and generate, using a model, based on the activity information, control information to control a power state of at least one of the one or more compute resources. The at least one control circuit may include a multiply-accumulate circuit. The at least one control circuit may include a neural processing unit (NPU). The model may include a neural network. The activity information may include first activity information, and the at least one control circuit may be further configured to collect second activity information for the one or more compute resources, and send the second activity information. The at least one control circuit may be further configured to receive, based on the sending the second activity information, one or more parameters for the model. The at least one control circuit may include a buffer to store the activity information. The at least one control circuit may be further configured to generate a timestamp for the activity information. The at least one control circuit may be further configured to generate the control information based on a characteristic of at least one of the one or more compute resources. The characteristic may include a breakeven energy.

An apparatus may include one or more compute resources configured to operate in a first power state, and operate, based on control information, in a second power state, and at least one control circuit configured to receive activity information for at least one of the one or more compute resources, and generate, using a model, based on the activity information, the control information. The apparatus may further include a power circuit configured to control the second power state based on the control information. The at least one control circuit may include a multiply-accumulate circuit. The at least one control circuit may include a neural processing unit.

A method may include collecting, using at least one control circuit connected to one or more compute resources, first activity information for the one or more compute resources, training, using the first activity information and a characteristic of at least one of the one or more compute resources, a model, collecting, using the at least one control circuit, second activity information for the one or more compute resources, generating, using the model and the second activity information, control information, and controlling, using the control information, a power state of at least one of the one or more compute resources. The training may include determining, based on the characteristic and a first portion of the first activity information, a first value corresponding to the first portion of the first activity information, determining, based on the characteristic and a second portion of the first activity information, a second value corresponding to the second portion of the first activity information, and generating, using the first portion of the first activity information, the second portion of the first activity information, the first value, and the second value, one or more parameters for the model. The first value may include a label. The label may include information to transition a power state of at least one of the one or more compute resources. The first value may include a quantity. The characteristic may include an amount of energy.

BRIEF DESCRIPTION OF THE DRAWINGS

The figures are not necessarily drawn to scale and in some figures, elements of similar structures or functions or portions thereof may generally be represented by reference indicators ending in, and/or containing, the same digits, letters, and/or the like, for illustrative purposes throughout the figures. The figures are only intended to facilitate the description of the various embodiments described herein. The figures do not describe every aspect of the teachings disclosed herein and do not limit the scope of the claims. To prevent the drawings from becoming obscured, not all of the components, connections, and the like may be shown, and not all of the components may have reference numbers. However, patterns of component configurations may be readily apparent from the drawings. The accompanying drawings, together with the specification, illustrate example embodiments of the present disclosure, and, together with the description, serve to explain the principles of the present disclosure.

Fig. 1 illustrates a computing system in accordance with example embodiments of the disclosure.

Fig. 2 illustrates a graph of example embodiments of power states and transitions between power states for a compute resource in accordance with example embodiments of the disclosure.

Fig. 3 illustrates a graph of example embodiments of activity states and transitions between activity states for multiple compute resources in accordance with example embodiments of the disclosure.

Fig. 4 illustrates an embodiment of a computing system having a model in accordance with example embodiments of the disclosure.

Fig. 5 illustrates an embodiment of a scheme for training a model for a computing system in accordance with example embodiments of the disclosure.

Fig. 6 illustrates an embodiment of a computing system having a model and a management controller in accordance with example embodiments of the disclosure.

Fig. 7 illustrates an example embodiment of a computing system with power gating in accordance with example embodiments of the disclosure.

FIG. 8 illustrates an example embodiment of machine learning training data in accordance with example embodiments of the disclosure.

FIG. 9 illustrates an example embodiment of an NPU monitor in accordance with example embodiments of the disclosure.

FIG. 10 illustrates an example embodiment of a method for training a machine learning model for power gating in accordance with example embodiments of the disclosure.

FIG. 11 illustrates an example embodiment of a method for utilizing a trained ML model for power gating in accordance with example embodiments of the disclosure.

FIG. 12 illustrates an example embodiment of a system that may implement power gating system instructions and/or NPU monitor instructions in accordance with example embodiments of the disclosure.

DETAILED DESCRIPTION

A computing system may include one or more compute resources configured to run computational workloads. Some compute resources may consume relatively large amounts of power and/or energy, especially when running certain computational workloads such as training and/or inference for artificial intelligence (AI), machine learning (ML), and/or the like. To reduce power and/or energy consumption, a compute resource may be configured to transition to a reduced power state based on an activity level of the compute resource. For example, power to a compute resource may be turned off (which may be referred to as power gating) for some or all of a portion of a workload during which the compute resource may be relatively inactive.

Transitioning a compute resource between power states, however, may consume time, energy, and/or the like. In some situations, an amount of energy associated with transitioning a compute resource into and/or out of a reduced power state (which may be referred to as a breakeven energy) may be greater than an amount of energy that may be saved by operating the compute resource in the reduced power state. In such situations, it may be beneficial to refrain from transitioning the compute resource into a reduced power state.

Some computing systems may decide whether to transition one or more compute resources between power states by performing an online calculation (e.g., during real-time operation) to determine whether an amount of energy saved by transitioning one or more compute resources between power states may exceed a breakeven energy. Depending on the implementation details, however, it may be difficult and/or expensive to perform online breakeven calculations because, for example, it may be difficult to predict active and/or idle durations for compute resources.

Some computing systems in accordance with example embodiments of the disclosure may implement one or more models that use artificial intelligence, machine learning, and/or the like, to control power states for one or more compute resources. For example, a control circuit may collect activity information for one or more compute resources and apply it as input to a machine learning model that may generate control information (e.g., a recommendation, a decision, and/or the like) that may be used to transition the one or more compute resources between different power states.

In some embodiments, a model in accordance with example embodiments of the disclosure may be trained using data collected by a control circuit. For example, a control circuit may collect a dataset (e.g., historical data) of activity information for one or more compute resources while the one or more compute resources run one or more computational workloads (e.g., target workloads).

In some embodiments, a model may be trained using one or more offline operations that may perform calculations such as energy breakeven calculations that may be too time consuming, resource intensive, and/or the like, to perform during online operation of the one or more compute resources. For example, a dataset of activity information collected by a control circuit may be loaded into a data processing system (e.g., a database system) that may use the computational resources of one or more CPUs, servers, data centers, and/or the like, to process the activity information and/or other information to generate a training dataset that may include values (e.g., labels, quantities, and/or the like) for corresponding portions of the activity information. Examples of other information that may be used to generate a training dataset may include one or more characteristics of the one or more compute resources such as a breakeven energy, an amount of power consumed while active, an amount of power consumed while idle, and/or the like.

Examples of labels that may be generated for a training dataset may include binary labels such as enter or do-not-enter (dne) recommendations and/or decisions to enter a certain power state. Examples of quantities that may be generated for a training dataset may include one or more numbers indicating a probability of the energy savings exceeding an energy breakeven if one or more compute resources transition to a different power state.

A training dataset may be used to train a model, for example, using an offline process in which parameters (which may include hyperparameters) such as weights, biases, and/or the like, for the model may be generated, adjusted, optimized, and/or the like. A trained model may be loaded (e.g., by loading one or more model parameters) into a control circuit that may use the model to control one or more power states of one or more compute resources during operation. The control circuit may collect and apply activity information as input to the trained model which may generate one or more control outputs to control one or more power states of one or more compute resources.

A control circuit in accordance with example embodiments of the disclosure may include one or more processors that may implement a model, for example, by performing operations such as applying weights to input data, combining intermediate results, applying activation functions to combined results, and/or the like. In some embodiments, a control circuit may include one or more NPUs which may include circuitry such as a multiply-accumulate (MAC) unit that may be specifically adapted to implement one or more models. Depending on the implementation details, the use of a processor such as an NPU may enable a control circuit to implement relatively complex (and therefore potentially more accurate) prediction models. Additionally, or alternatively, depending on the implementation details, the use of a processor such as an NPU may enable a control circuit to operate with a relatively wide range of training techniques, inferencing techniques, models, usage (e.g., activity) patterns of compute resources, and/or the like.

Some computing systems in accordance with example embodiments of the disclosure may include a management controller circuit that may receive a recommendation (e.g., to transition one or more compute resources between power states) from a model and decide whether to implement, at least partially, the recommendation. For example, a management controller circuit may receive a recommendation from a model to transition a cluster of compute resources to a reduced power state. Depending on one or more additional considerations, the management controller circuit may send control information to a power circuit to transition a subset of the cluster of compute resources to a reduced power state.

This disclosure encompasses numerous aspects relating to transitioning power states for compute resources. The aspects disclosed herein may have independent utility and may be embodied individually, and not every embodiment may utilize every aspect. Moreover, the aspects may also be embodied in various combinations, some of which may amplify some benefits of the individual aspects in a synergistic manner.

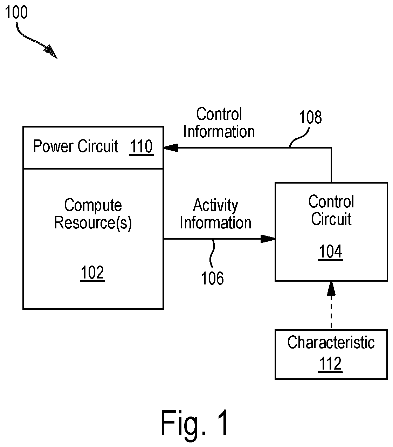

Fig. 1 illustrates a computing system in accordance with example embodiments of the disclosure. The computing system 100 illustrated in Fig. 1 may include one or more compute resources 102, a control circuit 104 that may generate control information 108 based on activity information 106 about the one or more compute resources 102, and/or a power circuit 110 that may control one or more power states of the one or more compute resources 102 based on the control information 108. In some embodiments, the control circuit 104 may also use one or more characteristics 112 of some or all of the one or more compute resources 102, and/or other information, to generate the control information 108.

The one or more compute resources 102 may be configured to run one or more computational workloads. Examples of compute resources 102 may include processing units such as central processing units (CPUs), graphics processing units (GPUs), neural processing units (NPUs), tensor processing units (TPUs), digital signal processors (DSPs), and/or the like. Additional examples of compute resources 102 may include circuitry such as combinational logic, sequential logic, gate arrays, timers, counters, registers, state machines, accelerators, and/or the like. Examples of computational workloads may include training, inference, and/or the like, for artificial intelligence (AI), machine learning (ML), neural networks, deep learning, and/or the like, which may be referred to collectively and/or individually as AIML. Some embodiments may be implemented with one or more of a die (which may also be referred to as a chip), a dielet (which may also be referred to as a chiplet), an SoC, a system-in-package (SIP), a multi-chip module, a chip-on-wafer-on-substrate (CoWoS) (e.g., with or without a semiconductor interposer), and/or the like, or a combination thereof.

Some compute resources 102 may consume relatively large amounts of power and/or energy, especially when running certain computational workloads (e.g., training, inference, and/or the like, for artificial intelligence, machine learning, and/or the like). To reduce power and/or energy consumption, the control circuit 104 and/or power circuit 110 may be configured to cause some or all of the compute resources 102 to operate in one or more power states based on activity information for the compute resource 102, the workload, and/or the like. For example, for a portion of a workload, a compute resource 102 may be relatively inactive (e.g., idle) and therefore may perform little or no useful work even though the compute resource 102 may continue to consume power (e.g., standby power, leakage power, and/or the like). Thus, the compute resource 102 may be placed in a reduced power state (e.g., power to the compute resource 102 may be reduced or turned off, which may be referred to as power gating) for some or all of a portion of a workload for which the compute resource 102 may be relatively inactive.

The power circuit 110 may be implemented with any apparatus that may control a power state of, and/or a flow of power to, one or more compute resources 102. Examples may include a power supply for all or a portion of a circuit, a power regulator (e.g., a voltage regulator) for all or a portion of a circuit, a switch, a bias current signal, and/or the like. The power control circuit may be implemented with one or more components that are separate from, and/or integral with, one or more compute resources 102. The power circuit 110 may be configured to control a power state one or more compute resources 102 at the level of individual compute resources 102 (e.g., a processing unit, a logic circuit, a state machine, and/or the like), a cluster of compute resources 102, a die having one or more compute resources 102, a package having one or more dies, and/or the like, or a combination thereof.

Transitioning a compute resource 102 between power states may consume time, energy, and/or the like. For example, turning off power to a compute resource 102 may involve storing information such as register values, cache contents, program counters, and/or the like, to a memory before turning off power to the compute resource 102 (which may be referred to as saving a state of the compute resource). Storing this information may consume time, energy, and/or the like. Additionally, or alternatively, loading such information from a memory after turning on power to the compute resource 102 (which may be referred to as restoring a state of the compute resource 102, e.g., to enable the compute resource 102 to resume a workload) may consume time, energy, and/or the like. Additionally, or alternatively, time, energy, and/or the like, may be consumed by one or more electrical processes for applying and/or removing power from a compute resource 102.

In some situations, an amount of energy associated with transitioning a compute resource 102 into and/or out of a reduced power state (which may be referred to as a transition energy, a transition energy penalty, and/or a breakeven energy) may be greater than an amount of energy that may be saved by operating the compute resource 102 in the reduced power state. Additionally, or alternatively, an amount of time associated with transitioning a compute resource 102 into and out of a reduced power state may be greater than an amount of time during which the compute resource 102 may operate in the reduced power state. In such situations, and depending on the implementation details, it may be beneficial to refrain from transitioning the compute resource 102 into a reduced power state.

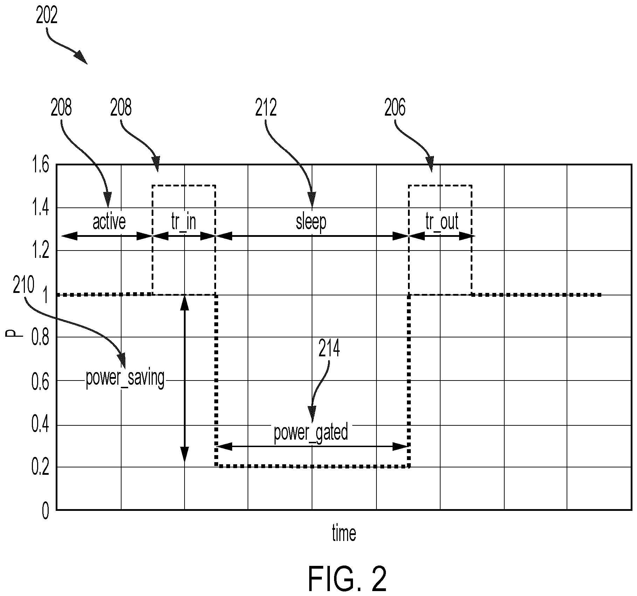

Fig. 2 illustrates a graph of example embodiments of power states and transitions between power states for a compute resource in accordance with example embodiments of the disclosure. In the graph 202, the vertical axis may indicate power P, for example, in watts. The horizontal axis may indicate time. In some embodiments, a compute resource may transition into a reduced power state (e.g., a power saving mode), when the compute resource is not active (e.g., idle), for example, to prevent a loss of data that may be stored in volatile memory, loss of a program counter location, and/or the like.

In some embodiments, an energy cost may be associated with transitioning from an active power state to a reduced power state (e.g., a power gating mode) corresponding top the power gated time period (power_gated) 204 illustated in Fig. 2. Active period 208 illustrates a period during which a compute resource is active. Upon entering into a power gating mode, the power may increase during the period tr_in as indicated by the transition in 204. The energy associated with entering the power gating mode (which may be referred to and/or characterized as a transition energy, energy cost, energy penalty, and/or the like) may be determined, for example, by the product of the power associated with the transition and the time tr_in (e.g., the area of the transition 204).

Upon exiting the power gating mode, power may similarly be expended in the transition, as indicated the transition out 206. The transition energy associated with exiting the power gating mode may be determined, for example, by the product of the power associated with the transition and the time tr_out (e.g., the area of the transition 206).

Power saving amount 210 indicates how much power may be saved by transitioning the compute resource to the power gating mode. Power gated time period (power_gated) 214 illustrates an example amount of time where power gating may be saving power. (In some embodiments, this may be implemented and/or referred to as, a sleep mode 212 for a compute resource.) In this example, the power consumed by the compute resource during a normal mode (e.g., a steady state) is illustrated as 1 Watt, and the power consumed during the power gating mode is illustrated as 0.2 Watts. Thus, the power saving during power gating mode may be 0.8 Watts. These numbers are merely examples and any amount of power may be used in each period based on the size, type, utility, and/or the like of the circuits. The energy saving during power gating mode may be determined, for example, by the product of the power saving amount 210 and the power gated time period power_gated 214. In some embodiments, a breakeven amount of energy for the energy saving may be equal to the sum of the energy cost of the transition 204 and the transition 206.

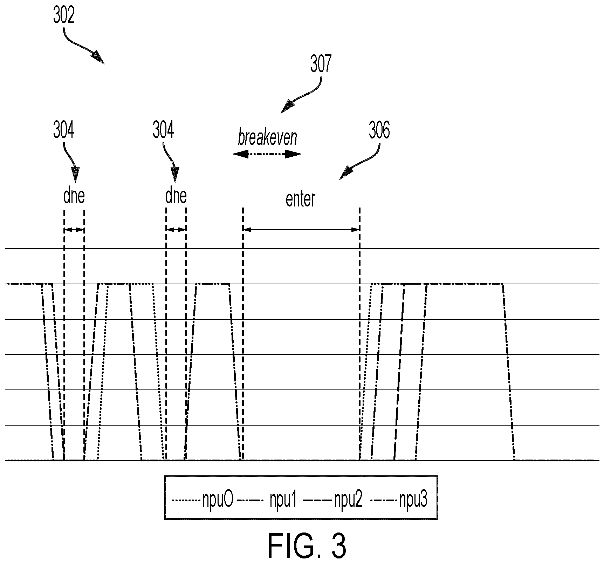

Fig. 3 illustrates a graph of example embodiments of activity states and transitions between activity states for multiple compute resources in accordance with example embodiments of the disclosure. The embodiment 302 illustrated in Fig. 3 may be illustrated in the context of compute resources implemented with four NPUs (NPU0-NPU3), but the principles may be applied to any numbers and/or types of compute resources. In the graph 302, activity states (e.g., active and/or inactive states, power consumption levels, and/or the like) for NPU0-NPU3 are indicated by the dashed and/or dotted lines according to the key at the bottom of Fig. 3.

Do-not-enter time period ("dne") 304 may indicate a time period during which NPU0-NPU3 may be inactive (e.g., idle) but for which the total transition energy for entering and exiting a power gated mode for NPU0-NPU3 may exceed a total energy saving for NPU0-NPU3. Additionally, or alternatively, do-not-enter (DNE) time period 304 may indicate a time period during which an enter transition period (tr_in) and/or exit transition period (tr_out) for one or more of NPU0-NPU3 may be greater than or equal to the time period DNE 304.

The time period "breakeven" 307 indicates a minimum amount of time for which one or more (e.g., all) of NPU0-NPU3 may be in a power gated mode for the total transition energy for entering and exiting a power gated mode for NPU0-NPU3 may be equal to a total energy saving for NPU0-NPU3. The time period "enter" 306 may indicate a range of time within which all of NPU0-NPU3 may be inactive (e.g., idle), and the total transition energy for entering and exiting a power gated mode for NPU0-NPU3 may be less than a total energy saving for placing NPU0-NPU3 in a power gated mode. Thus, in some embodiments, it may be beneficial to transition some or all of NPU0-NPU3 to a power gated mode during the time period "enter" 306.

Referring again to Fig. 1, some computing systems 100 in accordance with example embodiments of the disclosure may decide whether to transition one or more compute resources 102 between power states based on one or more considerations such as activity information 106 for one or more compute resources 102, one or more characteristics 112 of one or more compute resources 102, and/or other considerations. Activity information 106 may include current activity, recent activity, historical activity, and/or the like. Characteristics 112 may include breakeven energy, time to save a state of a compute resource, time to store a state of a compute resource, and/or the like.

In some embodiments, a computing system 100 may perform an online calculation (e.g., a calculation during real-time operation) to determine an energy breakeven duration for one or more compute resources 102, and therefore, determine whether to transition some or all of the one or more compute resources 102 to a different power state (e.g., enter a power gated state). Depending on the implementation details, however, it may be difficult and/or expensive (e.g., in terms of time, energy, and/or the like) to perform an online breakeven calculation because, for example, it may be difficult to predict durations of activity patterns (e.g., active, idle, and/or the like) for some or all of the one or more compute resources 102. As another example, in some embodiments, a computing system 100 may use heuristic algorithms (e.g., relatively simple heuristics) to make power transition decisions. Depending on the implementation details, however, such algorithms may not produce acceptable results.

Some computing systems 100 in accordance with example embodiments of the disclosure may implement one or more models that use artificial intelligence, machine learning, and/or the like, to control power states for some or all of the one or more compute resources 102.

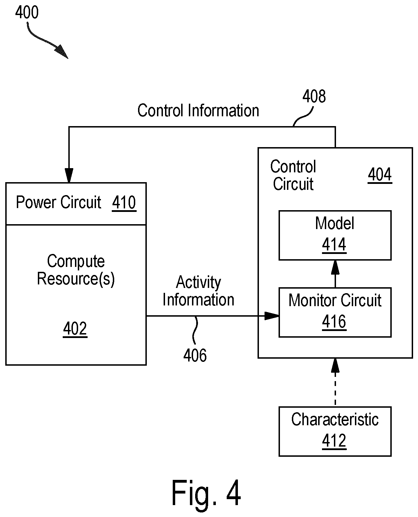

Fig. 4 illustrates an embodiment of a computing system having a model in accordance with example embodiments of the disclosure. The computing system 400 illustrated in Fig. 4 may include one or more elements that may be similar to those illustrated in Fig. 1 in which elements having similar construction, operation, and/or the like, may be indicated by reference numbers ending in, and/or containing, the same digits, letters, and/or the like.

In the computing system 400 illustrated in Fig. 4 (which in some embodiments may be referred to and/or characterized as an accelerator architecture), a control circuit 404 may include a model 414 that may generate control information 408 based on activity information 406 about one or more compute resources 402. A power circuit 410 may control one or more power states of the one or more compute resources 402 based on the control information 408. In some embodiments, the model 414 may also use one or more characteristics 412 of some or all of the one or more compute resources 402, and/or other information, to generate the control information 408. In some embodiments, the control circuit 404 may also include a monitor circuit 416 that may collect and/or store activity information 406 for the one or more compute resources 402. The model 414 may use activity information 406 for some or all of the one or more compute resources 402 as input to generate control information 408 (e.g., one or more recommendations, decisions, and/or the like) that may be used by the power circuit 410 to transition some or all of the one or more compute resources 402 between different power states.

A model in accordance with example embodiments of the disclosure may be trained, for example, using data collected by the monitor circuit 416. For example, the monitor circuit 416 may collect a dataset (e.g., historical data) of activity information 406 for some or all of the one or more compute resources 402 while the one or more compute resources 402 run one or more example (e.g., target) computational workloads. The activity information 406 may include, for example, time stamped data indicating when various compute resources 402 are active and/or inactive (e.g., idle), a level of activity when a compute resource 402 is active (e.g., a percentage of processing capacity), a type of activity when a compute resource 402 is active (e.g., computing, transferring data, and/or the like), how much power the various compute resources 402 consume for different operations, and/or the like.

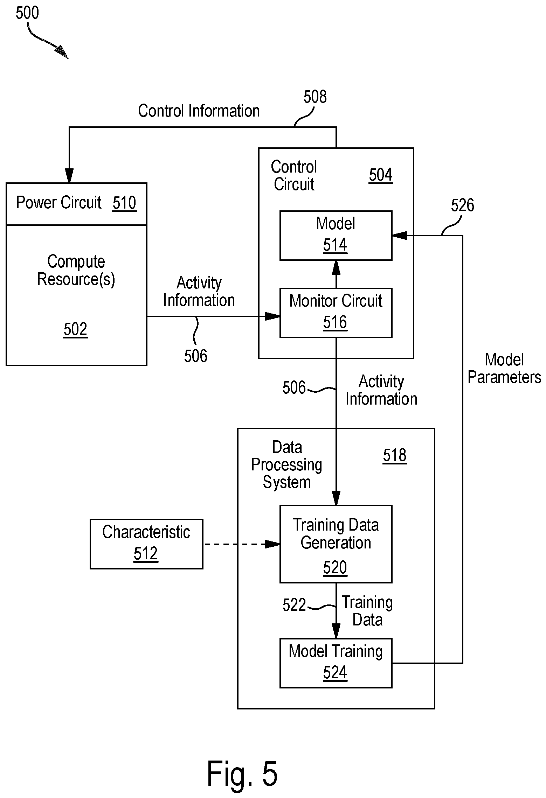

Fig. 5 illustrates an embodiment of a scheme for training a model for a computing system in accordance with example embodiments of the disclosure. The scheme 500 illustrated in Fig. 5 may include one or more elements that may be similar to those illustrated in Fig. 1 and/or Fig. 4 in which elements having similar construction, operation, and/or the like, may be indicated by reference numbers ending in, and/or containing, the same digits, letters, and/or the like.

The scheme 500 illustrated in Fig. 5 may include one or more data processing systems 518 that may perform one or more operations associated with training a mode 514. A model 514 may be trained, for example, using one or more offline operations that may perform calculations such as energy breakeven calculations that may be too time consuming, resource intensive, and/or the like, to perform during online operation of the one or more compute resources 502 and/or monitor circuit 516. For example, a dataset of activity information 506 collected by a monitor circuit 516 may be loaded into one or more data processing systems 518 (e.g., a database system) that may perform a training data operation 520 using the computational resources of one or more CPUs, servers, data centers, and/or the like, to process the activity information 506 and/or other information to generate a training dataset 522 that may include values (e.g., labels, quantities, and/or the like) for corresponding portions of the activity information 506. Examples of other information that may be used to generate a training dataset 522 may include one or more characteristics 512 of some or all of the one or more compute resources 502 such as breakeven energy, amount of power consumed while active, amount of power consumed while inactive (e.g., idle), and/or the like.

Examples of labels that may be generated for a training dataset 522 may include digital (e.g., binary) labels such as enter or do-not-enter (dne) decision, recommendations, and/or the like, to enter a certain power state, digital labels (e.g., using more than one binary bit) such as conditional versions of enter and/or dne decisions, recommendations, and/or the like, digital labels that may indicate a split decision, recommendation, and/or the like, in which some compute resources 502 may transition from a first power state to a second power state and some other compute resources 502 may stay in the first power state and/or transition to a third power state, and/or the like. Examples of quantities that may be generated for a training dataset 522 may include one or more numbers indicating a probability of the energy savings exceeding an energy breakeven if some or all of the one or more compute resources 502 transition to a different power state, a number of compute resources 502 to transition to a different power state, and/or the like.

A training dataset 522 may be used to train a model 514, for example, using a training process 524 (e.g., an offline process) in which one or more parameters 526 (which may include hyperparameters) such as weights, biases, and/or the like, for the model 514 may be generated, adjusted, optimized, and/or the like. A model 514 trained, for example, as described herein may be loaded into a control circuit 504 that may use the model 514 to control one or more power states of one or more compute resources 502 during operation. A trained model 514 may be loaded, for example, by loading one or more parameters 526 such as weights, biases, and/or the like, into a control circuit 504 that may include a monitor circuit 516 to collect activity information 506 (e.g., real-time or online activity information) for some or all of the one or more compute resources 502. The monitor circuit 516 may apply the collected activity information as input to the model 514 during online operation which may generate control information 508 to control one or more power states of some or all of the one or more compute resources 502.

A control circuit 504 in accordance with example embodiments of the disclosure may include one or more processors that may implement a model 514 (e.g., a neural network), for example, by performing operations such as applying weights to input data (e.g., multiplication), combining intermediate results (e.g., addition), applying activation functions to combined results, and/or the like.

Although the control circuit 504 is not limited to any specific type or amount of circuitry to implement a model 514, in some embodiments, a control circuit 504 may include one or more NPUs which may include circuitry that may be specifically adapted to implement one or more models. For example, in some embodiments, an NPU may include one or more multiply-accumulate (MAC) units that may perform multiplication and/or addition efficiently at relatively high speed, relatively low power, and/or the like. Depending on the implementation details, the use of a processor such as an NPU may enable a control circuit 504 to implement relatively complex (and therefore potentially more accurate) prediction models 514. Additionally, or alternatively, depending on the implementation details, the use of a processor such as an NPU may enable a control circuit 504 to operate with a relatively wide range of training techniques, inferencing techniques, models 514 (e.g., types, sizes, and/or the like), usage patterns (e.g., activity patterns) of compute resources 502, and/or the like, compared, for example, to a general purpose CPU.

In some embodiments, one or more NPUs used to implement any of the models disclosed herein may have any number of the following characteristics and/or implement any number of the following features, components, operations, and/or the like.

In some embodiments, an NPU may include one or more of the following components: a MAC unit (e.g., a MAC engine), an activation unit, a weight decoding circuit, a local and/or shared memory, an element-wise engine, a memory controller (e.g., a direct memory access (DMA) controller), and/or the like.

In some embodiments, a MAC unit may perform calculations for multiplication (e.g., matrix multiplication) and/or addition, convolution, dot products, and/or other functions. For example, in some embodiments, a MAC unit may multiply activity information 608 by corresponding weights and sum the results of the multiplication operations to generate intermediate results.

In some embodiments, an activation unit may scale intermediate results from a MAC unit, apply activation functions to the intermediate results, scale elementwise operations, perform resize operations, and/or the like.

In some embodiments, an element-wise engine may perform element-wise operation arithmetic operations.

In some embodiments, one or more of the components described herein may perform operations on integers, floating point numbers, a combination thereof, and/or the like.

In some embodiments, one or more of the components described herein may perform one or more operations on an element-wise basis, layer-wise basis (e.g., on layers of a neural network), depth-wise basis, and/or the like.

In some embodiments, an NPU may perform operations with relatively low precision arithmetic (e.g., eight bits or less), for example, to reduce computational complexity, increase energy efficiency, and/or the like.

In some embodiments, a weight decoding circuit may preload (e.g., prefetch) and/or decompress weight that may be compressed, for example, to reduce an amount of memory in which the weights may be stored. Depending on the implementation details, this may enable the implementation of larger models than may otherwise be handled by a specific control circuit, memory, and/or the like.

In some embodiments, an NPU may be adapted to perform AIML tasks and workloads such as calculating neural network layers with scalar, vector, and/or tensor math followed by one or more activation functions (e.g., nonlinear activation functions).

In some embodiments, an NPU may perform relatively low-latency parallel computing (e.g., performing multiple concurrent neural network operations.

In some embodiments, an NPU may utilize relatively high bandwidth memory (e.g., on-die memory) and/or acceleration hardware (e.g., systolic array architectures and/or tensor processing units). In some embodiments, an NPU may prefetch weights, activation, and/or the like.

In some embodiments, an NPU may implement one or more features such as a long short-term memory (LSTM) network that may implement a recurrent neural network (e.g., for problems involving learning order dependence in sequence prediction), a gated recurrent unit (GRU) for vanishing gradient problems, and/or the like.

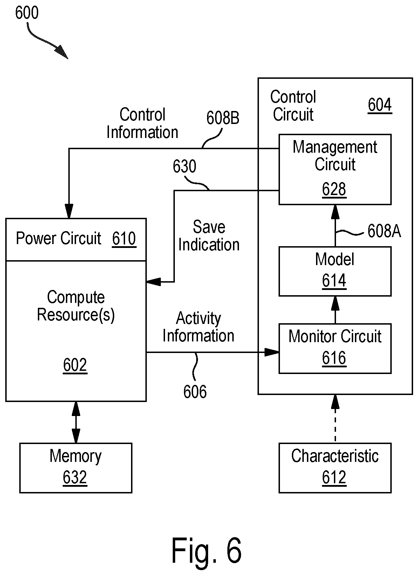

Fig. 6 illustrates an embodiment of a computing system having a model and a management controller in accordance with example embodiments of the disclosure. The computing system 600 illustrated in Fig. 6 may include one or more elements that may be similar to those illustrated in Fig. 1, Fig. 4, and/or Fig. 5 in which elements having similar construction, operation, and/or the like, may be indicated by reference numbers ending in, and/or containing, the same digits, letters, and/or the like.

In the computing system 600 illustrated in Fig. 6, a control circuit 604 may include a management circuit 628 that may control one or more aspects of the operation of one or more compute resources 602. For example, in some embodiments, the management circuit 628 may receive control information in the form of a recommendation 608A from a model 614. The management circuit 628 may use the recommendation 608A and/or other information available to management circuit 628 to make a decision whether to fully or partially implement the recommendation 608A and send control information 608B to a power circuit 610 to implement the decision.

For example, if the model 614 sends a recommendation 608A (e.g., a binary recommendation) indicating that it may be beneficial to transition all of the one or more compute resources 602 to a different power state (e.g., reduced power state), the management circuit 628 may check whether there is adequate space available in a memory 632 to save one or more states of the one or more compute resources 602. If there is adequate space, the management circuit 628 may implement the recommendation by sending control information 608B to the power circuit 610 causing the power circuit to transition the one or more compute resources 602 to the different power state, for example, for a specified period of time. Additionally, or alternatively, the management circuit 628 may send one or more save indications 630 (e.g., a digital signal) to cause the one or more compute resources 602 to save one or more states to the memory 632. If, however, there is not adequate space in the memory 632, the management circuit 628 may refrain from sending control information 608B to the power circuit, thereby maintaining the one or more compute resources 602 in their current power state.

As another example, if the model 614 sends a recommendation 608A in the form of a number indicating a probability that the energy savings exceeding an energy breakeven if all of the one or more compute resources 602 transition to a different power state, the management circuit 628 may compare the probability to a threshold to decide whether to transition the one or more compute resources 602 to the different state. For example, if the probability is relatively low, the management circuit 628 may refrain from transitioning the one or more compute resources 602 to a reduced power state, e.g., because the relatively low probability of saving energy may be outweighed by one or more other considerations such as a quality-of-service (QoS) arrangement that may provide an incentive to keep the one or more compute resources 602 running at full operating speed.

In some embodiments, the model 614 may make decisions, recommendations, and/or the like, and/or the management circuit 628 may make decisions, implement recommendations, and/or the like, at the level of individual compute resources, clusters of compute resources, dies, multiple dies within a package, and/or the like.

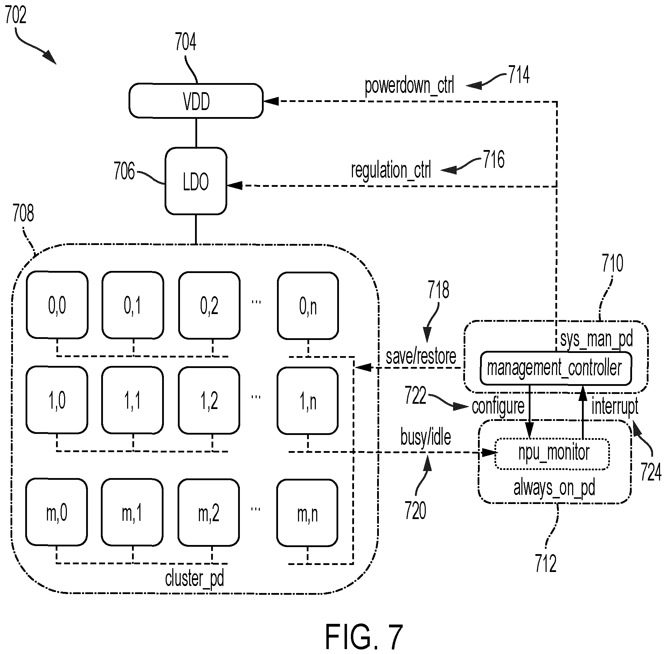

For purposes of illustration, some example embodiments illustrated in Figs. 7-11 may be described in the context of some specific implementation details such as NPUs arranged in clusters, power circuits implemented with regulators, specific signals, and/or the like. The principles of this disclosure, however, are not limited to these or any other implementation details.

Fig. 7 illustrates an example embodiment of a computing system with power gating in accordance with example embodiments of the disclosure. The computing system 702 illustrated in Fig. 7 may include a power source, Vdd 704, a Low Dropout Regulator (LDO) 706, an NPU cluster 708, a system management controller 710, and/or an NPU monitor 712. One or more of NPU cluster 708, system management controller 710, and an NPU monitor 712 may be on separate power domains. For example, NPU cluster 708 may be on a cluster power domain, system management controller 710 may be on a system management power domain, and the NPU monitor 712 may be on a power domain (e.g., an always on power domain) that may enable the NPU monitor 712 to monitor and/or control the NPU cluster 708. One or more (e.g., each) power domain may be connected to separate or the same power source such as Vdd 704. In NPU cluster 708 each box of the array may indicate one NPU of an NPU cluster. LDO 706 may operate like a power switch allowing power to be disconnected from the entire NPU cluster 708. In other embodiments, the LDO 706 may be configured to selectively disconnect power from different NPUs. LDO 706 may be implemented with any type of voltage regulation block, power gating block, power gating technique, and/or the like. Examples of LDO 706 may include linear voltage regulators, such as fixed voltage regulators, or adjustable voltage regulators, switching voltage regulators such as buck converters, boost converters, and/or the like, charge pumps Power Management ICs (PMICs), and/or the like.

The array of NPUs in 708 may include any number of NPUs depending, for example, on the system demands or architecture. One or more (e.g., all) NPUs in a given cluster may be idle, for example, to enter a cluster level power gating mode. In some embodiments, little or no work or processing may be occurring on each NPU in this cluster to turn the power off to the cluster, for example, in order to avoid work being interrupted. Further, to prevent work from being interrupted, NPU Monitor 712 may monitor the activity of NPU cluster 708.

NPU monitor 712 may monitor activity of NPU cluster 708 by receiving busy/idle information (e.g., data) 720 and training one or more ML models to operate in the NPU monitor 712. After the ML model is trained, for example, according to one or more methods described herein, the ML model may monitor activity of NPU cluster 708 based on busy/idle information 720. If the ML model determines that one or more (e.g., all) of the NPUs in cluster 708 may become idle for a period of time equal to or exceeding a breakeven time, the NPU monitor 712 may notify the system management controller 710 to stop NPU cluster 708. Interrupt 724 may be sent from NPU monitor 712 to send a powerdown control signal 714 and/or regulation control signal 716 to turn off the power to NPU cluster 708.

In addition to turning off the LDO 706 or power gating switch, the system management controller 710 may also handle Save/Restore 718 data movement. The system management controller 710 may, for example, save the state of NPU cluster 708 for when power is returned. To accomplish the power gating, NPU monitor 712 may perform efficient methods of ML and deciding when it is appropriate to turn on and off the NPU clusters.

Some embodiments may increase efficiency by building an offline model using the power breakeven durations and/or building the ML model to determine when it is appropriate to enter or not enter into power gating. The ML model may be built offline with information collected by the NPU monitor 712. For example, in some embodiments, the ML algorithm may be trained while offline, and the input to the ML model may be the aggregate NPU busy/idle data 720. In some embodiments, a power breakeven formula may be used to create labels, and the labels used in training the ML algorithm.

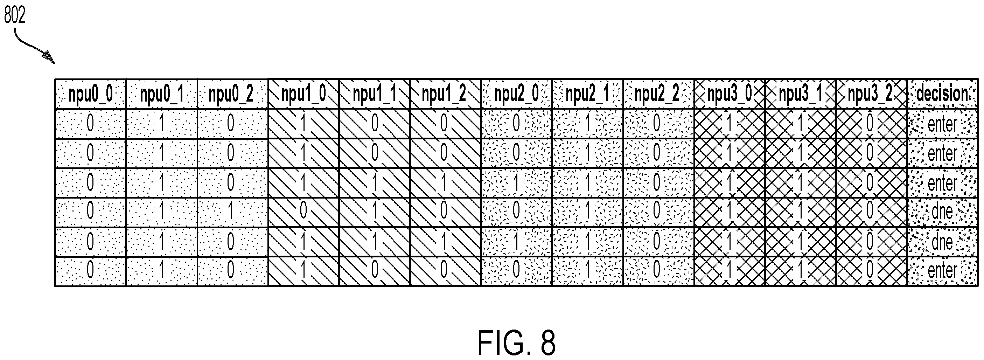

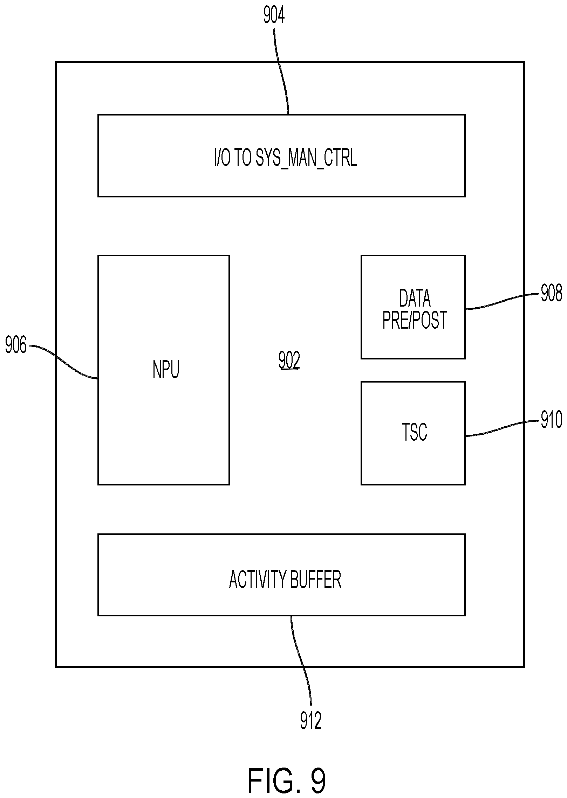

FIG. 8 illustrates an example embodiment of machine learning training data in accordance with example embodiments of the disclosure. Each row in ML training data 802 may represent an increment of time. In some embodiments, the data in the NPU history buffer, such as activity buffer 912 illustrated in Fig. 9, may be transformed and labeled such that it may accommodate a wide variety of ML and neural network models. The example ML training data 802 may transpose NPU data such that each row may contain data for three time steps for each NPU (for example, those illustrated in FIG. 7), and provide a label (e.g., decision) used for training. This is just one example of data transformation and labeling to accommodate one or more ML models. In some embodiments, a 0 may indicate that an NPU is active, and a 1 may indicate that an NPU is inactive or idle. In some other embodiments, a 1 may indicate that an NPU is active, and a 0 may indicate that an NPU is inactive or idle. Each row may include a label indicating a decision or recommendation to enter or do not enter a power gating mode based, for example, on a breakeven calculation. In some embodiments, the ML training data 802 may be referred to, and/or characterized as, vectorized data (e.g., activity information from NPU cluster 708 may be vectorized to create the ML training data 802.

In a training phase (e.g., offline mode), active and/or idle information may be streamed into an activity buffer such as activity buffer 912 illustrated in Fig. 9. An ML model may reside, for example, in an NPU in the NPU monitor 712 (e.g.,

such as NPU 906 illustrated in Fig. 9). In some embodiments, NPU 906 illustrated in Fig. 9 may interface with an I/O circuit to system management controller 904 illustrated in Fig. 9, which may send a signal (e.g., an interrupt) to the system management controller 710. In some embodiments, the signal to the system management controller may include a power gate enter, or power gate do not enter prediction from the ML model.

In one example embodiment, the NPU cluster 708 may be run for a certain period of time while busy and idle data is gathered and collected in NPU monitor 712. During an offline operation, the NPU monitor 712 may train the ML model using its own NPU 906. Additionally, or alternatively, multivariate training data may be recorded, for example, using an activity buffer 912. Using a breakeven formula, predictions of one or more idle durations may be calculated. Labels may be created during the offline process to indicate when to enter and when not to enter into power gating mode. Examples of ML models might include random forests, deep neural networks (DNNs), convolutional neural networks (CNNs), logistic regressions, and/or any classification algorithms. These are meant as examples and not intended as limiting in any way.

FIG. 9 illustrates an example embodiment of an NPU monitor in accordance with example embodiments of the disclosure. The NPU monitor 902 may exist on an independent power domain that may be on enough (e.g., always on) to ensure monitoring capabilities of the system. A separate voltage regulator may be provided for the NPU monitor 902 power. Activity buffer 912 may be used for storing active and/or idle information, and signals received from NPU cluster 708. The activity buffer 912 may be one or more memory units (e.g., static random access memory (SRAM) and/or dynamic random access memory (DRAM)), but any type of memory may be used for activity buffer 912.

NPU monitor 902 may include a time stamp counter (TSC) 910 that may be implemented, for example, with a clock or crystal oscillator to record event times. The NPU monitor 902 may execute an ML model (e.g., an ML algorithm) to decide and/or predict beneficial times for power gating. I/O to system management controller 904 may enable the NPU monitor 902 to communicate with the system management controller 710. The NPU 906 may include, for example, one or more multiply-accumulate (MAC) units.

The activity buffer 912 may have one or more sample rates. A sample rate may be variable. The activity buffer 912 may hold activity information illustrated in, for example, ML training data 802. In some embodiments, each row in ML training data 802 may indicate a different slice of time. Time stamp counter 910 may assign timestamps, for example, to each row of ML training data 802, to one or more time steps within a row (e.g., three time steps within a row as illustrated in Fig. 8), and/or the like. In some embodiments, the NPU 906 may be sized appropriately for an amount of idle data that is generated. The NPU 906 in some embodiments, may be customized for performing vector mathematics.

In a training phase for the ML algorithm, active and/or idle information may stream into activity buffer 912. The ML model may reside or be programmed into the NPU 906 in some embodiments. The NPU 906 may interface with I/O to system management controller 904, which in turn may send the signal out to the system management controller 710. In some embodiments, the data pre/post processer 908 may process the data that is coming and/or going from the NPU 906. For example, data may be quantized, compressed, decompressed, and/or the like, to match a format used by the NPU 906, the system management controller 710, and/or the like. In some embodiments, the data may be refined. Some example ML algorithms that may be run in NPU 906 include Random Forests, Deep Neural Networks, Convolutional Neural Networks, logistic regression, and/or the like. Any ML or AI algorithm may be performed and considered, including classification algorithms.

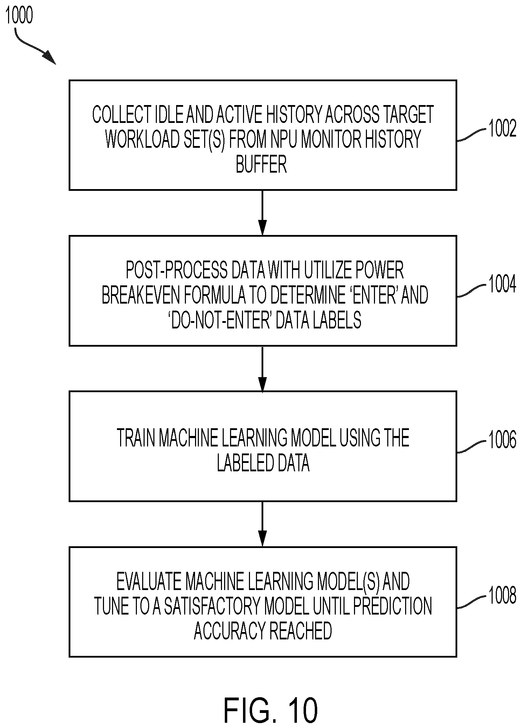

FIG. 10 illustrates an example embodiment of a method for training a machine learning model for power gating in accordance with example embodiments of the disclosure. Although the example method 1000 depicts a particular sequence of operations, the sequence may be altered without departing from the scope of the present disclosure. For example, some of the operations depicted may be performed in parallel or in a different sequence that does not materially affect the function of the method 1000. In other examples, different components of an example device or system that implements the method 1000 may perform functions at substantially the same time or in a specific sequence.

In some embodiments, the example method 1000 may be performed offline. In operation 1002, NPU monitor 902 may collect idle and active history across target workload sets from an NPU monitor history buffer. Collecting idle and active history may include, for example, receiving busy/idle data 720 from NPU cluster 708.

In operation 1004, NPU monitor 902 may post process data. The NPU monitor 902 may utilize a power breakeven formula to determine 'enter' and 'do-not-enter' data labels. In some embodiments, data pre/post processer 908 may perform the post processing.

In some embodiments, a power breakeven formula may be specified as:

$$\text{Energy Saved} \geq \text{Transition In Power} + \text{Transition Out Power}$$

where Transition In Power + Transition Out Power may be referred to and/or characterized as a transition energy penalty.

In operation 1006, NPU Monitor 902 may train one or more ML models using the labeled data. For example, any ML or AI training model may be used. Some examples may include DNN, CNN, classification methods, linear regression, and/or random forest techniques, but any model may be used.

In operation 1008, NPU monitor 902 may evaluate the ML model(s). NPU monitor 902 may tune or improve the data until a satisfactory model and prediction accuracy is reached.

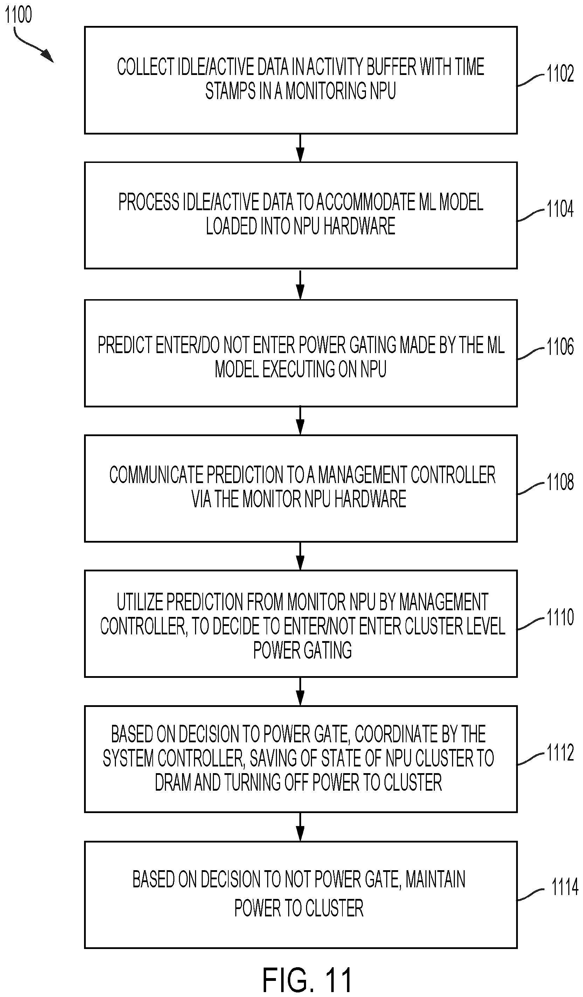

FIG. 11 illustrates an example embodiment of a method for utilizing a trained ML model for power gating in accordance with example embodiments of the disclosure. Although the example method 1100 depicts a particular sequence of operations, the sequence may be altered without departing from the scope of the present disclosure. For example, some of the operations depicted may be performed in parallel or in a different sequence that does not materially affect the function of the method 1100. In other embodiments, different components of an example device or system that implements the method 1100 may perform functions at substantially the same time or in a specific sequence. In some embodiments, example method 1100 may be performed online while the system is active.

In some embodiments, at operation 1102, NPU monitor 902 may collect idle and/or active data in activity buffer 912 using time stamps provided from time stamp counter 910. In some embodiments, at operation 1104, NPU monitor 902 may process the idle and/or active data to accommodate one or more ML models loaded into NPU 906 hardware.

In some embodiments, at operation 1106, NPU monitor 902 may predict one or more enter/do not enter power gating decisions using the ML model executing on NPU 906. In some embodiments, at operation 1108, NPU monitor 902 may transmit predictions to system management controller 710 via the I/O to system management controller 904 hardware.

In some embodiments, at operation 1110, the system management controller 710 may utilize predictions from monitor NPU monitor 902 to make decisions to enter/not enter cluster level power gating. For example, when the prediction indicates that the energy saved may be higher than the transition in power + transition out of power energy consumed, the system management controller 710 may send a signal to shut down NPU cluster 708.

In some embodiments, at operation 1112, the system management controller 710 may coordinate saving the states of the NPU cluster 708 to temporary storage, such as DRAM, and turn off the power gates or LDO 706 supplying power to the NPU cluster 708 cluster when a decision to power gate is made. In some embodiments, at operation at operation 1114, the system management controller 710 may maintain power to the NPU cluster 708 based on a decision to not enter a power gating mode.

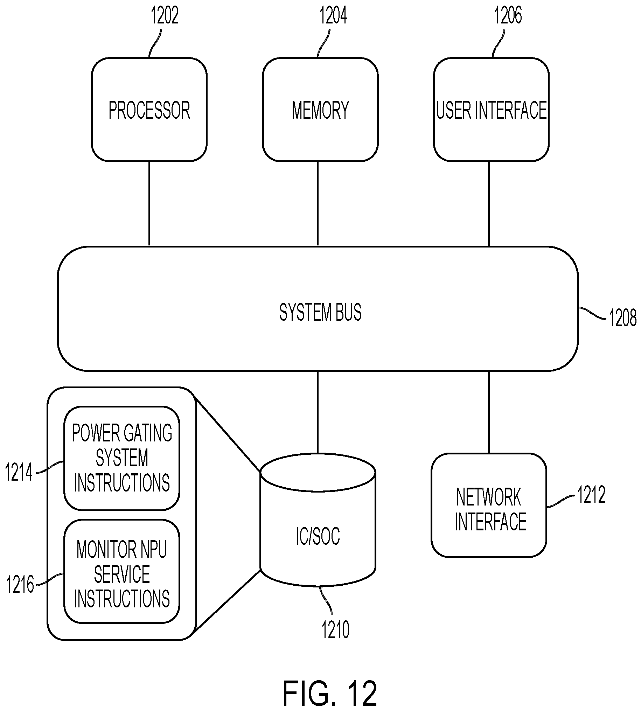

FIG. 12 illustrates an example embodiment of a system that may implement power gating system instructions and/or NPU monitor instructions in accordance with example embodiments of the disclosure. The system illustrated in Fig. 12 may include processing circuitry 1202 coupled to a memory 1204, an integrated circuit (IC) and/or system on chip (SoC) 1210, a user interface 1206 (or GUI), and/or a network interface 1212. In some embodiments, the components of the system illustrated in Fig. 12 may be communicatively connected via a system bus 1208. The system bus 1208 may be any type of data or system interconnect or fabric. System Bus 1208 may include interfaces and/or protocols such as Peripheral Component Interconnect Express (PCIe), Nonvolatile Memory Express (NVMe), NVMe-over-fabric (NVMe-oF), Ethernet, Transmission Control Protocol/Internet Protocol (TCP/IP), User Datagram Protocol (UDP), remote direct memory access (RDMA), RDMA over Converged Ethernet (ROCE), FibreChannel, InfiniBand, Serial ATA (SATA), Small Computer Systems Interface (SCSI), Serial Attached SCSI (SAS), iWARP, Hypertext Transfer Protocol (HTTP), Compute Express Link (CXL), and/or the like, or any combination thereof.

The processing circuitry 1202 may be realized with one or more hardware logic components and/or circuits. For example, and without limitation, illustrative types of hardware logic components that can be used include NPUs, NPU clusters, field programmable gate arrays (FPGAs), application-specific integrated circuits (ASICs), Application-specific standard products (ASSPs), system-on-a-chip systems (SOCs), general-purpose microprocessors, microcontrollers, digital signal processors (DSPs), Graphics Processing Units, (GPUs), and the like, or any other hardware logic components that can perform calculations or other manipulations of information.

The memory 1204 may be volatile (e.g., RAM, etc.), non-volatile (e.g., ROM, flash memory, etc.), or a combination thereof. In some configurations, computer readable instructions to implement one or more embodiments disclosed herein may be stored in the IC/SoC 1210.

In another embodiment, the memory 1204 may be configured to store software. In some embodiments, software may refer to any type of instructions, whether referred to as software, firmware, middleware, microcode, hardware description language, or otherwise. Instructions may include code (e.g., in source code format, binary code format, executable code format, or any other suitable format of code). Instructions, when executed by the processing circuitry 1202, may cause the processing circuitry 1202 to perform the various processes described herein. Specifically, the instructions, when executed, cause the processing circuitry 1202 to execute ML algorithms, track and collect data on processor/NPU idle and active status, train ML models and/or execute power gating according to the learned models.

The IC/SoC 1210 may be one or more Integrated Circuits (ICs) or SoC including components described herein as well as storage memory, for example, flash memory or other memory technology, or any other medium which can be used to store the desired information. In some embodiments, IC/SoC 1210 may include one or more power gating apparatuses with one or more clusters of NPU/GPUs, a power source, a voltage regulator, one or more system management controllers, and an NPU monitor. In some embodiments, IC/SoC 1210 may include all or parts of power gating apparatus 702, for example.

IC/SoC 1210 may store and maintain power gating system instructions 1214 which may execute according to method 1000 and/or method 1100, as well as monitor NPU service instructions 1216 which may execute according to the appropriate ML algorithms discussed herein. The network interface 1212 may enable the system illustrated in Fig. 12 to communicate with the internet, intranet, cloud server networks, and/or the like, for the purpose of receiving data, sending data, and the like.

Some embodiments include a system of one or more computers which can be configured to perform particular operations or actions by virtue of having software, firmware, hardware, or a combination of them installed on the system that in operation causes or cause the system to perform the actions. One or more computer programs may be configured to perform particular operations or actions by virtue of including instructions that, when executed by data processing apparatus, cause the apparatus to perform the actions. One general aspect includes an apparatus with a first NPU cluster. The apparatus may also an NPU controller circuit configured to turn power on and off of the first NPU cluster. The apparatus may also include an NPU monitor circuit configured to send instructions to the NPU controller circuit to turn power on and off of the first NPU cluster.

In some embodiments, the NPU monitor circuit may include an NPU which is configured to process active and idle signals of the first NPU cluster received from the NPU controller circuit. The NPU monitor circuit may further include a time stamp counter which time stamps entries input to the NPU. The NPU monitor circuit further may include an activity buffer which is configured to store the active and idle signals of the first NPU cluster. The NPU may further be configured to train a machine learning model using the active and idle signals. The machine learning model may be used for power gating the first NPU cluster. The NPU monitor circuit may further include an input/output interface to the NPU controller circuit that is configured to receive the active and idle signals from the NPU monitor circuit. The NPU monitor circuit may further include an input/output interface to the NPU controller circuit that is configured to transfer the power gating decisions to the NPU monitor circuit. The NPU monitor circuit may include a data pre and/or post processor that is configured to process the data entering and exiting the NPU. The NPU may also include a second NPU cluster.

In some embodiments, an apparatus may include an NPU cluster. The apparatus may include an NPU controller circuit configured to turn power on and off of the NPU cluster. The apparatus, in some embodiments may include an NPU monitor circuit configured to collect idle and active data in an activity buffer with time stamps in the NPU monitor circuit. The apparatus may send instructions to the NPU controller circuit to turn power on and off of the NPU cluster based on the idle and active data in some embodiments.

In some embodiments, the NPU monitor circuit may further be configured to process the idle and active data to accommodate a machine learning model loaded into an NPU in the NPU monitor circuit, and predict enter or do not enter power gating made by the ML model executing on the NPU. The NPU monitor circuit may further be configured to communicate a prediction to the NPU controller circuit via the NPU monitor circuit and utilize a prediction from the NPU monitor circuit by the NPU controller circuit, to enter power gating for the NPU cluster. The NPU monitor circuit may further be configured to save a state of the NPU cluster to a memory. The NPU monitor circuit may further be configured to turn off the power gates or LDO supplying power to the cluster.

According to some embodiments, the method may include receiving data from a buffer on an NPU monitor circuit that monitors an NPU cluster. The method may include training, by an NPU in the NPU monitor circuit, the data based on the receiving. The method may also include transmitting, by the NPU monitor circuit, based on the training, a signal to turn off power of the NPU cluster.

The method may further include processing, by the NPU monitor circuit, the data, where the training is based on the processing. The receiving, according to some embodiments, may include collecting an idle and active history across a target workload set from the buffer on the NPU monitor circuit. The processing may further include assigning labels to the data. The training may be done based on the assigned labels.

Some embodiments disclosed above have been described in the context of various implementation details, but the principles of this disclosure are not limited to these or any other specific details. For example, some functionality has been described as being implemented by certain components, but in other embodiments, the functionality may be distributed between different systems and components in different locations and having various user interfaces. Certain embodiments have been described as having specific processes, operations, etc., but these terms also encompass embodiments in which a specific process, operation, etc. may be implemented with multiple processes, operations, etc., or in which multiple processes, operations, etc. may be integrated into a single process, step, etc. A reference to a component or element may refer to only a portion of the component or element. For example, a reference to a block may refer to the entire block or one or more subblocks. The use of terms such as "first" and "second" in this disclosure and the claims may only be for purposes of distinguishing the elements they modify and may not indicate any spatial or temporal order unless apparent otherwise from context. In some embodiments, a reference to an element may refer to at least a portion of the element, for example, "based on" may refer to "based at least in part on," and/or the like. A reference to a first element may not imply the existence of a second element. The principles disclosed herein have independent utility and may be embodied individually, and not every embodiment may utilize every principle. However, the principles may also be embodied in various combinations, some of which may amplify the benefits of the individual principles in a synergistic manner. The various details and embodiments described above may be combined to produce additional embodiments according to the inventive principles of this patent disclosure.

In some embodiments, a portion of an element may refer to less than, or all of, the element. A first portion of an element and a second portion of the element may refer to the same portions of the element. A first portion of an element and a second portion of the element may overlap (e.g., a portion of the first portion may be the same as a portion of the second portion).

**Claims**

1. An apparatus comprising:
   at least one control circuit configured to:

   receive activity information for one or more compute resources; and
   generate, using a model, based on the activity information, control information to control a power state of at least one of the one or more compute resources.

2. The apparatus of claim 1, wherein the at least one control circuit comprises a multiply-accumulate circuit.

3. The apparatus of claim 1 or 2, wherein the at least one control circuit comprises a neural processing unit.

4. The apparatus of any one of claims 1 to 3, wherein the model comprises a neural network.

5. The apparatus of any one of claims 1 to 4, wherein the activity information comprises first activity information, and the at least one control circuit is further configured to:

   collect second activity information for the one or more compute resources; and
   send the second activity information.

6. The apparatus of claim 5, wherein the at least one control circuit is further configured to receive, based on the sending the second activity information, one or more parameters for the model.

7. The apparatus of any one of claims 1 to 6, wherein the at least one control circuit comprises a buffer to store the activity information.

8. The apparatus of any one of claims 1 to 7, wherein the at least one control circuit is further configured to generate a timestamp for the activity information.

9. The apparatus of any one of claims 1 to 8, wherein the at least one control circuit is further configured to generate the control information based on a characteristic of at least one of the one or more compute resources.

10. The apparatus of claim 9, wherein the characteristic comprises a breakeven energy.

11. A method comprising:

   collecting, using at least one control circuit connected to one or more compute resources, first activity information for the one or more compute resources;
   training, using the first activity information and a characteristic of at least one of the one or more compute resources, a model;
   collecting, using the at least one control circuit, second activity information for the one or more compute resources;
   generating, using the model and the second activity information, control information; and
   controlling, using the control information, a power state of at least one of the one or more compute resources.

12. The method of claim 11, wherein the training comprises:

   determining, based on the characteristic and a first portion of the first activity information, a first value corresponding to the first portion of the first activity information;

determining, based on the characteristic and a second portion of the first activity information, a second value corresponding to the second portion of the first activity information; and

generating, using the first portion of the first activity information, the second portion of the first activity information, the first value, and the second value, one or more parameters for the model.

13. The method of claim 12, wherein the first value comprises a label.

14. The method of claim 13, wherein the label comprises information to transition a power state of at least one of the one or more compute resources.

15. The method of any one of claims 12 to 14, wherein the first value comprises a quantity.

100

Power Circuit  110

Compute
Resource(s)

102

Control
Information

108

Activity
Information

106

Control
Circuit

104

Characteristic

112

Fig. 1

FIG. 2

302

307

304    304    *breakeven*    306

dne    dne    enter

------- npu0 ----- npu1 ---- npu2 ---- npu3

## FIG. 3

400

408

Control Information

Control
Circuit    404

Power Circuit   410

Model
414

Compute
Resource(s)

402

Activity
Information

406

Monitor Circuit
416

Characteristic
412

Fig. 4

Fig. 5

600

Fig. 6

FIG. 7

802

| npu0_0 | npu0_1 | npu0_2 | npu1_0 | npu1_1 | npu1_2 | npu2_0 | npu2_1 | npu2_2 | npu3_0 | npu3_1 | npu3_2 | decision |
|---|---|---|---|---|---|---|---|---|---|---|---|---|
| 0 | 1 | 0 | 1 | 0 | 0 | 0 | 1 | 0 | 1 | 1 | 0 | enter |
| 0 | 1 | 0 | 1 | 0 | 0 | 0 | 1 | 0 | 1 | 1 | 0 | enter |
| 0 | 1 | 0 | 1 | 1 | 1 | 1 | 1 | 0 | 1 | 1 | 0 | enter |
| 0 | 1 | 1 | 0 | 1 | 0 | 0 | 1 | 0 | 1 | 1 | 0 | dne |
| 0 | 1 | 0 | 1 | 1 | 1 | 1 | 1 | 0 | 1 | 1 | 0 | dne |
| 0 | 1 | 0 | 1 | 0 | 0 | 0 | 1 | 0 | 1 | 1 | 0 | enter |

FIG. 8

FIG. 9

EP 4 567 561 A1

1000

COLLECT IDLE AND ACTIVE HISTORY ACROSS TARGET WORKLOAD SET(S) FROM NPU MONITOR HISTORY BUFFER — 1002

POST-PROCESS DATA WITH UTILIZE POWER BREAKEVEN FORMULA TO DETERMINE 'ENTER' AND 'DO-NOT-ENTER' DATA LABELS — 1004

TRAIN MACHINE LEARNING MODEL USING THE LABELED DATA — 1006

EVALUATE MACHINE LEARNING MODEL(S) AND TUNE TO A SATISFACTORY MODEL UNTIL PREDICTION ACCURACY REACHED — 1008

FIG. 10

24

1100

COLLECT IDLE/ACTIVE DATA IN ACTIVITY BUFFER WITH TIME STAMPS IN A MONITORING NPU — 1102

PROCESS IDLE/ACTIVE DATA TO ACCOMMODATE ML MODEL LOADED INTO NPU HARDWARE — 1104

PREDICT ENTER/DO NOT ENTER POWER GATING MADE BY THE ML MODEL EXECUTING ON NPU — 1106

COMMUNICATE PREDICTION TO A MANAGEMENT CONTROLLER VIA THE MONITOR NPU HARDWARE — 1108

UTILIZE PREDICTION FROM MONITOR NPU BY MANAGEMENT CONTROLLER, TO DECIDE TO ENTER/NOT ENTER CLUSTER LEVEL POWER GATING — 1110

BASED ON DECISION TO POWER GATE, COORDINATE BY THE SYSTEM CONTROLLER, SAVING OF STATE OF NPU CLUSTER TO DRAM AND TURNING OFF POWER TO CLUSTER — 1112

BASED ON DECISION TO NOT POWER GATE, MAINTAIN POWER TO CLUSTER — 1114

FIG. 11

FIG. 12

Europäisches
Patentamt

European
Patent Office

Office européen
des brevets

# EUROPEAN SEARCH REPORT

**Application Number**

EP 24 21 7096

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/349519 A1 (AQRABAWI LEO [US] ET AL) 11 November 2021 (2021-11-11) * paragraphs [0001], [0028], [0030], [0031], [0039], [0041], [0084] * ----- | 1-15 | INV. G06F1/3206 G06F1/3234 G06F1/3287 G06N3/063 |
| A | US 2023/244921 A1 (ROYZEN EVGENY [IL] ET AL) 3 August 2023 (2023-08-03) * paragraph [0003] * ----- | 3 | |

| TECHNICAL FIELDS SEARCHED (IPC) |
|---|
| G06F G06N |

The present search report has been drawn up for all claims

| Place of search | Date of completion of the search | Examiner |
|---|---|---|
| The Hague | 24 March 2025 | Ghiette, Vincent |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
    .......................................................................................
& : member of the same patent family, corresponding
    document

EPO FORM 1503 03.82 (P04C01)

**EP 4 567 561 A1**

## ANNEX TO THE EUROPEAN SEARCH REPORT
## ON EUROPEAN PATENT APPLICATION NO.

EP 24 21 7096

This annex lists the patent family members relating to the patent documents cited in the above-mentioned European search report.
The members are as contained in the European Patent Office EDP file on
The European Patent Office is in no way liable for these particulars which are merely given for the purpose of information.

24-03-2025

| Patent document cited in search report | | Publication date | Patent family member(s) | | Publication date |
|---|---|---|---|---|---|
| US 2021349519 | A1 | 11-11-2021 | CN | 113625859 A | 09-11-2021 |
| | | | DE | 102020131586 A1 | 11-11-2021 |
| | | | JP | 2021177367 A | 11-11-2021 |
| | | | US | 2021349519 A1 | 11-11-2021 |
| US 2023244921 | A1 | 03-08-2023 | CN | 118541702 A | 23-08-2024 |
| | | | EP | 4473449 A1 | 11-12-2024 |
| | | | US | 2023244921 A1 | 03-08-2023 |
| | | | WO | 2023146613 A1 | 03-08-2023 |

EPO FORM P0459

For more details about this annex : see Official Journal of the European Patent Office, No. 12/82